# EUROPEAN PATENT APPLICATION

(11) **EP 2 897 094 A1**
(43) Date of publication of application: **22.07.2015**
(21) Application number: 13837507.6
(22) Date of filing: 13.05.2013
(51) Int. Cl.: G06Q 20/40

(54) **METHOD FOR PHONE AUTHENTICATION IN E-BUSINESS TRANSACTIONS AND COMPUTER-READABLE RECORDING MEDIUM HAVING PROGRAM FOR PHONE AUTHENTICATION IN E-BUSINESS TRANSACTIONS RECORDED THEREON**

(30) Priority: 14.09.2012 KR 20120102358
(71) Applicant: Thinkat Co. Ltd., Seoul 152-768 (KR)
(72) Inventor: KIM, Gwi Yeol, Seoul 152-100 (KR); PARK, Ju Hong, Seongnam-si Gyeonggi-do 462-817 (KR)
(74) Representative: Stolmár & Partner Patentanwälte PartG mbB
(86) International application number: PCT/KR2013/004229
(87) International publication number: WO 2014/042336

(57) **Abstract**

The present invention relates to a method for phone authentication in e-business transactions using a terminal for phone authentication, which provides a non-repudiation function through a link to a trusted third party, and to a computer-readable recording medium having a program recorded thereon for phone authentication used in e-business transactions using a terminal for phone authentication, which provides the non-repudiation function by means of the link to the trusted third party.

## Description

### Technical Field

The present invention generally relates to a phone authentication method in an e-business transaction using a phone authentication terminal for providing a non-repudiation function via association with a trusted authority, and a computer-readable recording medium storing a phone authentication program in an e-business transaction using a phone authentication terminal for providing a non-repudiation function via association with a trusted authority. More particularly, the present invention relates to a phone authentication method in an e-business transaction using a phone authentication terminal for providing a non-repudiation function via association with a trusted authority, which replaces a function of a certificate used in conventional e-commerce or financial transactions such as money transfer with phone authentication, and to a computer-readable recording medium storing a phone authentication program in an e-business transaction using a phone authentication terminal for providing a non-repudiation function via association with the trusted authority.

### Background Art

For identification methods over the Internet, authentication of a real name using a user's resident registration number was used in the past. However, since real name authentication using a resident registration number has the risk of leakage of a resident registration number, an Internet-Personal Identification Number (I-PIN), which is a personal identification number for replacing a resident registration number, has recently been used.

In e-commerce fields such as financial transactions over the Internet, various passwords such as a transfer password and an account password have been widely used as a scheme for raising security as well as an identification function of verifying the identity of a person currently involved in transaction. In addition, the use of a certificate has been generalized as an authentication means having legal force in the digital signature act. Recently, the use of a One-Time-Password (OTP), which is a password that changes for each e-commerce transaction, is increasing.

Such a conventional authentication method adopts a scheme in which a user terminal requests e-commerce from a service provision server over a communication network, and information corresponding to a certificate or OTP information stored in a certificate server is provided, thus identifying the user.

However, from a technical aspect, as hacking technology such as memory hacking has advanced, security vulnerability to a certificate and an OTP has become a social problem, and one-way authentication is performed, so that a problem arises in that there is a possibility of repudiation that performance of e-commerce is not conducted by the user himself or herself.

In order to solve this problem, in some schemes, a two-track security scheme has been used in which a separate call center makes a call to a mobile terminal or a wired terminal designated by a user and verifies whether a transaction is authorized, in addition to authentication based on a certificate and an OTP. More specifically, such a two-track scheme has been widely utilized by users to avoid hacking when items may be collected at a specific account as in the case of an online game, and is implemented as an algorithm in that, when a user inserts ID/password and requests a login without simply inserting only an ID and a password upon logging in to a game site, a login procedure is completed only if a call is made from a call center to the mobile terminal or the wired terminal set by the user and then the user approves a current transaction via a verification procedure.

Accordingly, in this technical field, there is required the development of technology for enabling verification based on a phone call to be used in the future as a means capable of replacing a certificate to solve the security problem of the above-described certificate by solving the limitation of phone verification being used as a simple auxiliary security means in conventional two-track security.

### Disclosure

### Technical Problem

Accordingly, the present invention has been made keeping in mind the above problems, and an object of the present invention is to provide a phone authentication method in an e-business transaction using a phone authentication terminal for providing a non-repudiation function via association with a trusted authority, and a computer-readable recording medium storing a phone authentication program in an e-business transaction using a phone authentication terminal for providing a non-repudiation function via association with the trusted authority, which verify whether e-business transactions including e-commerce and e-financial transactions are authorized by making a phone call to a phone authentication terminal designated by the user.

Another object of the present invention is to provide a phone authentication method in an e-business transaction using a phone authentication terminal for providing a non-repudiation function via association with a trusted authority, and a computer-readable recording medium storing a phone authentication program in an e-business transaction using a phone authentication terminal for providing a non-repudiation function via association with the trusted authority, which store non-repudiation information for e-business transactions in an authentication-related authority corresponding to a third party other than an authority for conducting e-business transactions with a user and which function as an existing certificate center or an OTP center.

A further object of the present invention is to provide a phone authentication method in an e-business transaction using a phone authentication terminal for providing a non-repudiation function via association with a trusted authority and a computer-readable recording medium storing a phone authentication program in an e-business transaction using a phone authentication terminal for providing a non-repudiation function via association with the trusted authority, which provide not only a non-repudiation function for e-business transactions, but also an authentication information reuse prevention function, a function of preventing the leakage of authentication information generation values, a function of coping with an intermediary attack, and a function of preventing the interception of a data session.

However, objects of the present invention are not limited to the above-described objects, and other objects that are not described may be clearly understood from the following description.

### Technical Solution

In order to accomplish the above objects, a phone authentication method in an e-business transaction using a phone authentication terminal for providing a non-repudiation function via association with a trusted authority the present invention according to an embodiment of the present invention includes 1) by a phone authentication request terminal, transmitting a phone certificate password (PIN number) to a Trusted Third Party (TTP) server via an e-business server connected to an Internet Protocol (IP) network, and enabling the phone certification password to be stored in the TTP server, thus registering the phone certificate password (PIN number); 2) by the TTP server, receiving e-business details information from the e-business server, receiving a phone certificate password (PIN number) that is re-input for checking from the phone authentication request terminal via the e-business server depending on an e-business transaction between the phone authentication request terminal and the e-business server, and determining that the re-input phone certificate password (PIN number) is identical to the stored phone certificate password (PIN number); 3) by the TTP server, encrypting combined data of the e-business details information and the re-input phone certificate password (PIN number) and storing encrypted data; and 4) by the e-business server, transmitting a phone approval request for making a call to a phone authentication terminal corresponding to an approval phone number received from the phone authentication request terminal to an Interactive Voice Response (IVR) server, thus enabling phone approval to be obtained.

Further, the phone authentication method in an e-business transaction using a phone authentication terminal for providing a non-repudiation function via association with a trusted authority according to an embodiment of the present invention may further include, before 1), by the phone authentication request terminal, performing a login to the e-business server through the IP network at a request of the user; by the phone authentication request terminal, applying to the e-business server for a phone authentication service using the phone authentication terminal owned by the user through the IP network; and by the e-business server, transmitting a phone authentication service registration request to the phone authentication request terminal through the IP network.

Furthermore, in the phone authentication method in an e-business transaction using a phone authentication terminal for providing a non-repudiation function via association with a trusted authority according to an embodiment of the present invention, 1) may be configured such that, as the user enters, not only the phone certificate password (PIN number), but also the approval phone number corresponding to a phone number of the phone authentication terminal, and a transaction authorization number (transfer authorization number), if the phone authentication request terminal transmits the approval phone number, the phone certificate password (PIN number), and the transaction authorization number (transfer authorization number) to the e-business server through the IP network, the e-business server transmits the phone certificate password (PIN number) to the TTP server through a leased line (L1), thus enabling the phone certificate password (PIN number) to be stored in the TTP server.

Furthermore, the phone authentication method in an e-business transaction using a phone authentication terminal for providing a non-repudiation function via association with a trusted authority according to an embodiment of the present invention may further include, between 1) and 2), 1-1) by the e-business server, requesting the IVR server to make a subscription call for the phone authentication service to the phone authentication terminal corresponding to the approval phone number while transmitting the approval phone number, the phone certificate password (PIN number), and the transaction authorization number (transfer authorization number) to the IVR server through a leased line (L2) connected to the IVR server.

Furthermore, the phone authentication method in an e-business transaction using a phone authentication terminal for providing a non-repudiation function via association with a trusted authority according to an embodiment of the present invention may further include, between 1) and 2), after performing 1-1), 1-2) by the IVR server, storing the phone certificate password (PIN number) and the transaction authorization number (transfer authorization number) received from the e-business server.

Furthermore, the phone authentication method in an e-business transaction using a phone authentication terminal for providing a non-repudiation function via association with a trusted authority according to an embodiment of the present invention may further include, between 1) and 2), after performing 1-2), 1-3) by the IVR server, transmitting guidance of phone authentication service subscription as voice data to the phone authentication terminal corresponding to the approval phone number through a wired/wireless telephone network.

Furthermore, the phone authentication method in an e-business transaction using a phone authentication terminal for providing a non-repudiation function via association with a trusted authority according to an embodiment of the present invention may further include, between 1) and 2), after performing 1-3), 1-4) by the phone authentication terminal, receiving inputs identical to the phone certificate password (PIN number) and the transaction authorization number (transfer authorization number) entered by the user so as to confirm subscription to the phone authentication service, and returning the received phone certificate password (PIN number) and transaction authorization number (transfer authorization number) to the IVR server through the wired/wireless telephone network.

Furthermore, the phone authentication method in an e-business transaction using a phone authentication terminal for providing a non-repudiation function via association with a trusted authority according to an embodiment of the present invention may further include, between 1) and 2), after performing 1-4), 1-5) by the IVR server, determining that the phone certificate password (PIN number) received from the phone authentication terminal is identical to the phone certificate password (PIN number) stored at 1-2), determining that the transaction authorization number (transfer authorization number) received from the phone authentication terminal is identical to the transaction authorization number (transfer authorization number) stored at 1-2), and notifying the e-business server of a phone authentication service subscription completion message through the leased line (L2), thus terminating a phone authentication service application procedure.

Furthermore, in the phone authentication method in an e-business transaction using a phone authentication terminal for providing a non-repudiation function via association with a trusted authority according to an embodiment of the present invention, 2) may include 2-1) by the phone authentication request terminal, performing the e-business transaction with the e-business server via transmission/reception of data to/from the e-business server through the IP network; 2-2) by the phone authentication request terminal, receiving again the phone certificate password (PIN number) identical to the phone certificate password (PIN number) entered by the user at 1) and transmitting the phone certificate password (PIN number) to the e-business server through the IP network; 2-3) by the e-business server, transmitting the e-business details information and the phone certificate password (PIN number) received at 2-2) to the TTP server through the leased line (L1); and 2-4) by the TTP server, comparing the phone certificate password (PIN number) received at 2-3) with the phone certificate password (PIN number) stored at 1), thus determining whether the phone certificate passwords are identical to each other.

Furthermore, in the phone authentication method in an e-business transaction using a phone authentication terminal for providing a non-repudiation function via association with a trusted authority according to an embodiment of the present invention, 3) may be configured such that the TTP server generates and stores transaction non-repudiation information by encrypting combined data of the e-business details information and the phone certificate password (PIN number) received at 2-3), and such that storage of the e-business details information is not performed.

Furthermore, the phone authentication method in an e-business transaction using a phone authentication terminal for providing a non-repudiation function via association with a trusted authority according to an embodiment of the present invention may further include, between 3) and 4), by the TTP server, transmitting results of checking the phone certificate password (PIN number) to the e-business server through the leased line (L1).

Furthermore, in the phone authentication method in an e-business transaction using a phone authentication terminal for providing a non-repudiation function via association with a trusted authority according to an embodiment of the present invention, 4) may include 4-1) by the e-business server, transmitting the e-business details information to the IVR server through the leased line (L2) while transmitting a phone approval request to the IVR server; 4-2) by the IVR server, transmitting guidance of a phone approval request including voice data-based e-business details information to the phone authentication terminal through the wired/wireless telephone network; 4-3) by the phone authentication terminal, receiving from the user a transaction authorization number(transfer authorization number) identical to the transaction authorization number (transfer authorization number) input to the phone authentication request terminal at 1), and transmitting the received transaction authorization number (transfer authorization number) to the IVR server through the wired/wireless telephone network; 4-4) by the IVR server, comparing the transaction authorization number (transfer authorization number) received from the phone authentication terminal with the transaction authorization number (transfer authorization number) stored at 1-2), and determining that the transaction authorization numbers are identical to each other, and then generating results of phone approval; 4-5) by the IVR server, transmitting the phone approval results to the e-business server through the leased line (L2); and 4-6) by the e-business server, completing the e-business transaction, and then transmitting the phone approval results to the phone authentication request terminal through the IP network.

In order to accomplish the above objects, a computer-readable recording medium storing a phone authentication program in an e-business transaction using a phone authentication terminal for providing a non-repudiation function via association with a trusted authority according to an embodiment of the present invention includes a phone authentication application unit for controlling a transmission/reception unit so that a phone certificate password (PIN number) is received from a phone authentication request terminal through an IP network and is transmitted to a Trusted Third Party (TTP) server, thus registering the phone certificate password (PIN number) in the TTP server; an e-business transaction unit for performing an e-business transaction with the phone authentication request terminal; an e-business transaction non-repudiation unit for controlling the transmission/reception unit so that e-business details information and a phone certificate password (PIN number), which is re-entered for checking from the phone authentication request terminal via the e-business server, are transmitted to the TTP server, thus allowing the TTP server to encrypt and store combined data of the e-business details information and the phone certificate password (PIN number); and a phone authentication execution unit for controlling the transmission/reception unit so that a phone approval request to make a call to a phone authentication terminal corresponding to an approval phone number received from the phone authentication request terminal is transmitted to an Interactive Voice Response (IVR) server, thus enabling phone approval of the phone authentication terminal to be obtained.

### Advantageous Effects

The phone authentication method in an e-business transaction using a phone authentication terminal for providing a non-repudiation function via association with a trusted authority and the computer-readable recording medium storing a phone authentication program in an e-business transaction using a phone authentication terminal for providing a non-repudiation function via association with the trusted authority according to an embodiment of the present invention provide the advantage of determining whether e-business transactions including e-commerce and e-financial transactions are authorized, via a phone call made to a phone authentication terminal designated by the user.

Further, the phone authentication method in an e-business transaction using a phone authentication terminal for providing a non-repudiation function via association with a trusted authority and a computer-readable recording medium storing a phone authentication program in an e-business transaction using a phone authentication terminal for providing a non-repudiation function via association with the trusted authority according to another embodiment of the present invention provide the advantage of storing non-repudiation information for e-business transactions in an authentication-related authority corresponding to a third party, in addition to an authority that conducts e-business transactions with the user, thus enabling the function of an existing certificate center or an OTP center to be performed.

In addition, the phone authentication method in an e-business transaction using a phone authentication terminal for providing a non-repudiation function via association with a trusted authority and a computer-readable recording medium storing a phone authentication program in an e-business transaction using a phone authentication terminal for providing a non-repudiation function via association with the trusted authority according to a further embodiment of the present invention provide the advantage of preventing the reuse of authentication information, preventing the leakage of authentication information generation values, coping with an intermediary's attack, and preventing interception of a data session, as well as a non-repudiation function for e-business transactions.

### Description of Drawings

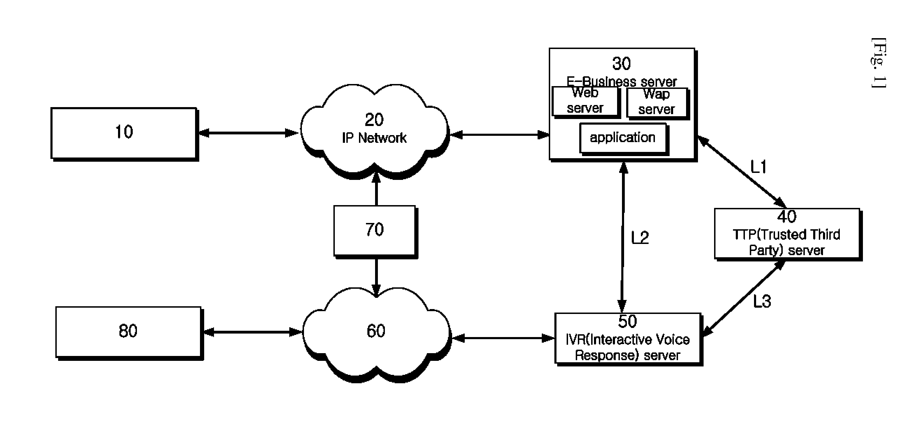

FIG. 1 is a diagram showing an overall system in which a phone authentication method in an e-business transaction using a phone authentication terminal for providing a non-repudiation function via association with a trusted authority according to an embodiment of the present invention is implemented;

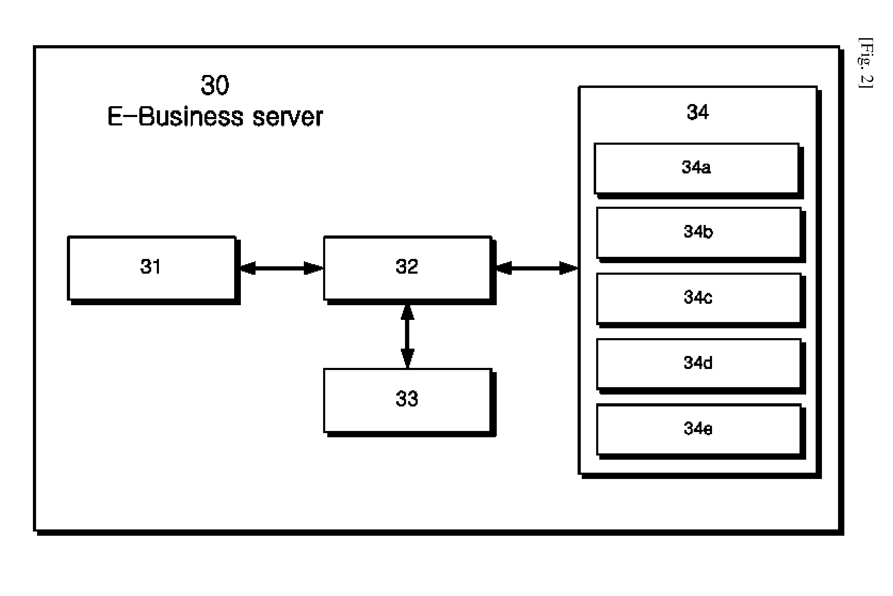

FIG. 2 is a diagram showing the e-business server of an e-business transaction authentication system using a phone authentication terminal shown in FIG. 1;

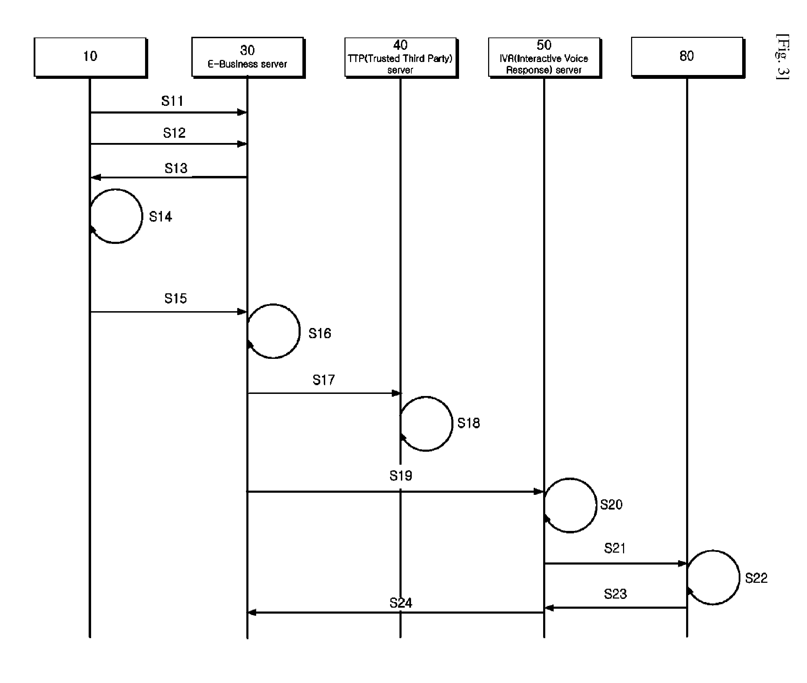

FIG. 3 is a flowchart showing a phone authentication service application procedure in a phone authentication method in an e-business transaction using a phone authentication terminal for providing a non-repudiation function via association with a trusted authority according to an embodiment of the present invention;

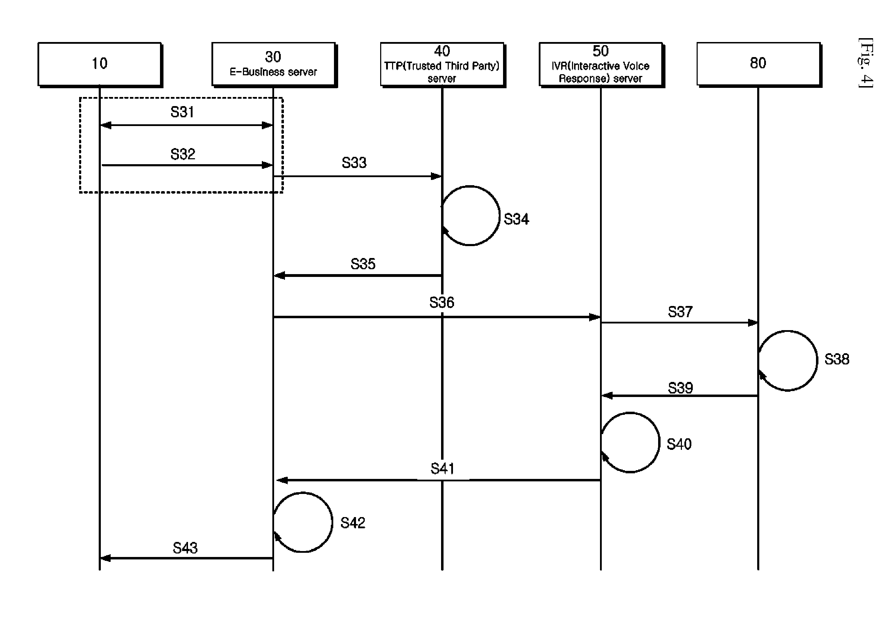

FIG. 4 is a flowchart showing an e-business transaction procedure based on a phone authentication service in the phone authentication method of FIG. 3 in an e-business transaction using a phone authentication terminal for providing a non-repudiation function via association with a trusted authority according to an embodiment of the present invention; and

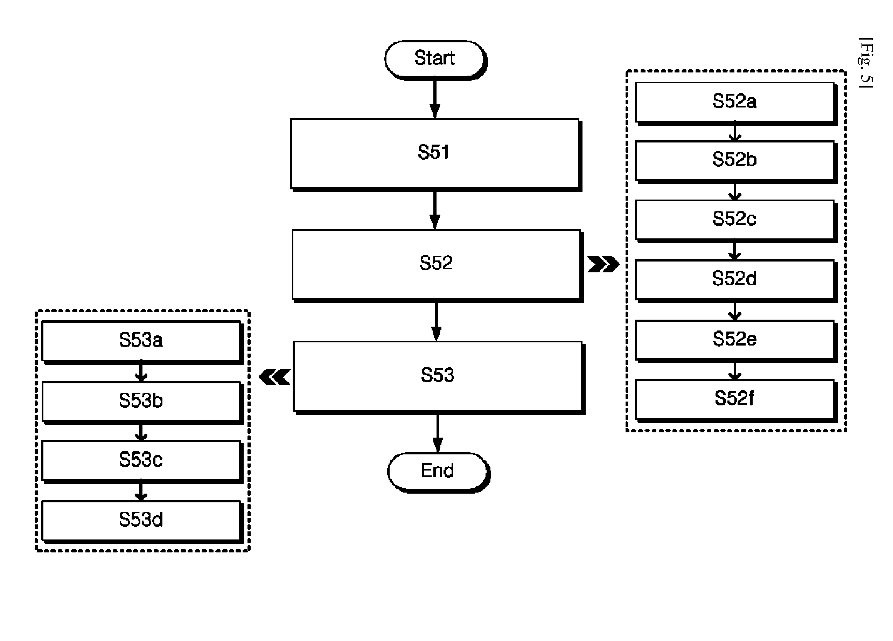

FIG. 5 is a flowchart showing in detail an input procedure performed by a phone authentication request terminal for performing a transfer transaction when an e-business transaction is a transfer transaction, in the phone authentication method of FIG. 4 in an e-business transaction using a phone authentication terminal for providing a non-repudiation function via association with a trusted authority according to an embodiment of the present invention.

### Best Mode

Hereinafter, a phone authentication method in an e-business transaction using a phone authentication terminal for providing a non-repudiation function via association with a trusted authority, and a recording medium storing a phone authentication program in an e-business transaction using a phone authentication terminal for providing a non-repudiation function via association with a trusted authority according to embodiments of the present invention will be described in detail with reference to the attached drawings.

It is apparent that the following embodiments are detailed descriptions for helping the understanding of the present invention and are not intended to limit the scope of the present invention. Therefore, equivalents for performing the same function as the present invention will be included in the scope of the present invention.

Further, it should be noted that the same reference numerals are used to designate the same or similar elements throughout the drawings. In the following description of the present invention, detailed descriptions of known configurations or functions which are deemed to make the gist of the present invention obscure will be omitted.

In embodiments of the present invention, "communication", "communication network", "Internet", and "network" may be used as the same meaning. The three terms denote wired/wireless local-area and wide-area data transmission/reception networks capable of transmitting and receiving files between a user terminal, terminals of other users, and a download server.

In the following description, "server" denotes a server computer connected to users so that the users access the server computer and use content. When the capacity of the server is low or when the number of users is small, a plurality of programs may be operated in a single server. Further, when the capacity of the server is very high or when the number of real-time accessing users is large, one or more servers for operating a single system may be present according to the functionality of the server.

Further, in the present specification, "e-business transaction" denotes a wide meaning applied to e-commerce transactions, e-financial transactions such as a transfer in Internet banking, and various types of certificate (authorization) transactions conducted online, and must be able to accommodate online tasks in all companies.

FIG. 1 is a diagram showing an overall system (hereinafter referred to as an "e-business transaction authentication system using a phone authentication terminal") in which a phone authentication method in an e-business transaction using a phone authentication terminal for providing a non-repudiation function via association with a trusted authority according to an embodiment of the present invention is implemented. Referring to FIG. 1, the e-business transaction authentication system using the phone authentication terminal includes a phone authentication request terminal 10, an Internet Protocol (IP) network 20, an e-business server 30, a Trusted Third Party (TTP) server 40, an Interactive Voice Response (IVR) server 50, a wired/wireless telephone network 60, a gateway (GW) 70, and a phone authentication terminal 80.

The phone authentication request terminal 10 is provided with a web or Wireless Application Protocol (WAP) browser and is configured to access the e-business server 30 and to allow a user to enter an "approval phone number" which is the phone number of the phone authentication terminal 80 for phone authentication owned by the same user, "phone certificate password (Personal Identification Number: hereinafter referred to as a 'PIN number'), and "transaction authorization number (transfer authorization number)" through the web or the WAP browser.

The IP network 20 is a high-speed backbone network of a large-scale communication network enabling large-capacity and long-distance voice and data services, and may be, for example, the Internet. Further, the IP network may be a next-generation wired network for providing ALL IP-based high-speed multimedia services, and includes, in a wide meaning, a leased line and a Virtual Private Network (VPN) line in the existing IP network 20.

The IP network 20 functions to mutually transfer signals and data between the phone authentication request terminal 10, the e-business server 30, and other systems.

The wired/wireless telephone network 60 is a communication network which includes a circuit network such as a Public Switched Telephone Network (PSTN), or a Wideband Code Division Multiple Access (WCDMA) network including a circuit network and a packet network in a wide meaning, and which transfers audio information. Although, as an example of a wireless telephone network, a WCDMA network has been exemplified, it is well known that the network may be changed to a next-generation mobile communication network such as 3G Long Term Evolution (LTE) network and a 4G network.

The wired/wireless telephone network 60 functions to mutually transfer signals and data between the phone authentication terminal 80, the IVR server 50, and other systems.

The GW 70 denotes a gateway, which is one of protocol converters, and enables the transmission/reception of data between the phone authentication terminal 80 and the IVR server 50 which are connected in a wired or wireless manner through the wired/wireless telephone network 60, and the phone authentication request terminal 10 and the e-business server 30 which are connected through the IP network 20. The GW 70 is a WAP or web gateway, and may include a protocol stack that is accessed between the IP network 20 and the wired/wireless telephone network 60.

The phone authentication terminal 80 denotes a terminal designated by the user who owns the phone authentication request terminal 10 to perform phone authentication, and may have a wide meaning including a wired terminal and a wireless terminal. The phone authentication terminal 80 may preferably be set to a smart phone that is currently and widely used, but is not limited thereto. The phone authentication terminal 80, which is a device for providing Internet services including Internet data to users through a wireless link, may be a portable device in a comprehensive meaning. That is, the phone authentication terminal 80 may include multimedia phones and multimedia players, such as a typical wired/wireless phone, a Voice IP (VoIP) phone, a mobile phone, a wireless terminal, a Personal Digital Assistant (PDA), a Global System for Mobile communication (GSM) phone, a Wideband CDMA (WCDMA) phone, a CDMA-2000 phone, a Mobile Broad and System (MBS) phone, a Portable Multimedia Player (PMP), and a handheld computer. Here, the MBS phone may be a mobile phone to be used in a fourth generation system currently being discussed.

The e-business server 30 may be a bank server by which e-financial transactions are conducted, or a web server or a WAP server that enables e-commerce services to be performed, and includes all types of servers such as an application server, and all types of equipment.

Further, the TTP server 40 is a certification center, and, in another embodiment of the present invention, an Auto Response System (ARS) may be operated in conjunction with the TTP server 40. That is, the ARS system is formed in the TTP server 40 corresponding to the certificate center and is used to manage a phone certificate password (hereinafter referred to as a "PIN number") upon applying for a phone authentication service.

Meanwhile, the e-business server 30, the TTP server 40, and the IVR server 50 will be described in detail later.

FIG. 2 is a diagram showing the e-business server 30 of the e-business transaction authentication system using the phone authentication terminal of FIG. 1. Referring to FIG. 2, the e-business server 30 includes a transmission/reception unit 31, a control unit 32, a database (DB) 33, and a transaction authentication module 34. Further, the transaction authentication module 34 includes a phone authentication application means 34a, a phone authentication preparation means 34b, an e-business transaction means 34c, an e-business transaction non-repudiation means 34d, and a phone authentication execution means 34e. Below, the e-business server 30 will be described in detail based on the configuration of the transaction authentication module 34.

The phone authentication application means 34a controls the transmission/reception unit 31 so that a login from the phone authentication request terminal 10 through the IP network 20 is accommodated.

Thereafter, the phone authentication application means 34a controls the transmission/reception unit 31 so that an application for a phone authentication service using the phone authentication terminal 80 owned by the user of the phone authentication request terminal 10 is received from the phone authentication request terminal 10 through the IP network 20.

The phone authentication application means 34a controls the transmission/reception unit 31 so that a phone authentication service registration request is transmitted to the phone authentication request terminal 10 through the IP network 20, and so that an approval phone number corresponding to the phone number of the phone authentication terminal 80, a phone certificate password (PIN number), and a transaction authorization number (transfer authorization number) are received from the phone authentication request terminal 10 through the IP network 20. Thereafter, the phone authentication application means 34a stores the approval phone number of the phone authentication terminal 80 in the DB 33.

The phone authentication preparation means 34b controls the transmission/reception unit 31 so that the phone certificate password (PIN number) is transmitted to the TTP server 40 through a leased line L1 connected to the TTP server 40, thus enabling the phone certificate password (PIN number) to be stored in the TTP server 40.

The phone authentication preparation means 34b controls the transmission/reception unit 31 so that a subscription call for a phone authentication service to the phone authentication terminal 80 corresponding to the approval phone number is requested from the IVR server 50 while the approval phone number, the phone certificate password (PIN number), and the transaction authorization number (transfer authorization number), which are received by the phone authentication application means 34a, are transmitted to the IVR server 50 through a leased line L2 connected to the IVR server 50, thus enabling the phone certificate password (PIN number) and the transaction authorization number (transfer authorization number) to be stored in the IVR server 50.

Meanwhile, by means of the above-described series of algorithms executed by the phone authentication application means 34a and the phone authentication preparation means 34b, the IVR server 50 sends guidance of subscription to the phone authentication service as voice data to the phone authentication terminal 80 corresponding to the approval phone number received from the phone authentication preparation means 34b through the wired/wireless telephone network 60. Accordingly, the phone authentication terminal 80 receives the same inputs as the phone certificate password (PIN number) and the transaction authorization number (transfer authorization number) entered by the user, and returns the received phone certificate password (PIN number) and transaction authorization number (transfer authorization number) to the IVR server 50 through the wired/wireless telephone network 60. Thereafter, the IVR server 50 determines that the phone certificate password (PIN number) received from the phone authentication preparation means 34b is identical to the phone certificate password (PIN number) received from the phone authentication terminal 80, and determines that the transaction authorization number (transfer authorization number) received from the phone authentication preparation means 34b is identical to the transaction authorization number (transfer authorization number) received from the phone authentication terminal 80, and thereafter notifies the e-business server 30 of a phone authentication service subscription completion message through the leased line L2, thus terminating the phone authentication service application procedure.

Referring back to the configuration of the e-business server 30, the e-business transaction means 34c controls the transmission/reception unit 31 so that an e-business transaction is conducted via the transmission/reception of data to/from the phone authentication request terminal 10 connected to the IP network 20.

The e-business transaction non-repudiation means 34d controls the transmission/reception unit 31 so that, as the user of the phone authentication request terminal 10 re-enters the same phone certificate password (PIN number) as that entered in the phone authentication service application procedure, the re-entered phone certificate password is received from the phone authentication request terminal 10 through the IP network 20.

The e-business transaction non-repudiation means 34d controls the transmission/reception unit 31 so that e-business details information and the re-entered phone certificate password (PIN number) are transmitted to the TTP server 40 through the leased line L1, thus enabling the TTP server 40 to generate transaction non-repudiation information based on the encryption of combined data of the e-business details information and the phone certificate password (PIN number). Here, the transaction non-repudiation information is used in the present invention to perform the same function as a function of preventing the user who uses an e-commerce or e-financial transaction from repudiating the transaction itself, wherein such a function is the principal function of a conventional certificate. In summary, the TTP server 40 generates and stores transaction non-repudiation information for an e-business transaction including e-business details information using a phone certificate password (PIN number), but there is a characteristic that even the TTP server 40 cannot check transaction details using only e-business details information itself. Factor values of non-repudiation information may preferably include a transaction date and time (including minutes and seconds), a withdrawal account number, a transfer amount, a deposit account number, a deposit bank code, and a remittee.

The phone authentication execution means 34e controls the transmission/reception unit 31 so that the results of checking the phone certificate password (PIN number) are received from the TTP server 40 through the leased line L1, and so that e-business details information is transmitted to the IVR server 50 through the leased line L2 while a phone approval request is transmitted to the IVR server 50. Therefore, the IVR server 50 transmits guidance of a phone approval request including e-business details information based on voice data to the phone authentication terminal 80 through the wired/wireless telephone network 60. Thereafter, when the phone authentication terminal 80 receives from the user the same transaction authorization number (transfer authorization number) as that input to the phone authentication request terminal 10 upon applying for the phone authentication service, and transmits it to the IVR server 50 through the wired/wireless telephone network 60, the IVR server 50 generates phone approval results and transmits the approval results to the e-business server 30.

The phone authentication execution means 34e receives the phone approval results to complete the e-business transaction (S42), and then controls the transmission/reception unit 31 so that the phone approval results are transmitted to the phone authentication request terminal 10 through the IP network 20.

FIG. 3 is a flowchart showing a phone authentication service application procedure in the phone authentication method in an e-business transaction using a phone authentication terminal for providing a non-repudiation function via association with a trusted authority according to an embodiment of the present invention. Referring to FIGS. 1 to 3, the phone authentication request terminal 10 performs a login to the e-business server 30 through the IP network 20 at the request of a user (S11).

After step S11, the phone authentication request terminal 10 applies to the e-business server 30 for a phone authentication service using the phone authentication terminal 80 owned by the user through the IP network 20 (S12).

After step S12, the e-business server 30 transmits a phone authentication service registration request to the phone authentication request terminal 10 through the IP network 20 (S13).

After step S13, when the user enters an approval phone number corresponding to the phone number of the phone authentication terminal 80 owned by the user, a phone certificate password (PIN number), and a transaction authorization number (transfer authorization number) (S14), the phone authentication request terminal 10 transmits the entered approval phone number, phone certificate password (PIN number), and transaction authorization number (transfer authorization number) to the e-business server 30 through the IP network 20 (S15).

After step S15, the e-business server 30 stores the approval phone number of the phone authentication terminal 80 designated by the user in the DB 33 (S16).

After step S16, the e-business server 30 transmits the phone certificate password (PIN number) received at step S15 to the TTP server 40 through a leased line L1 connected to the TTP server 40 (S17).

Accordingly, the TTP server 40 stores the phone certificate password (PIN number) (S18).

After step S18, the e-business server 30 requests the IVR server 50 to make a subscription call for a phone authentication service to the phone authentication terminal 80 corresponding to the approval phone number while transmitting the approval phone number, phone certificate password (PIN number), and transaction authorization number (transfer authorization number) received at step S15 to the IVR server 50 through a leased line L2 connected to the IVR server 50 (S19).

After step S19, the IVR server 50 stores the phone certificate password (PIN number) and the transaction authorization number (transfer authorization number) received from the e-business server 30 at step S19 (S20).

After step S20, the IVR server 50 transmits guidance of subscription to the phone authentication service as voice data to the phone authentication terminal 80 corresponding to the approval phone number received at step S19 through the wired/wireless telephone network 60 (S21).

After step S21, the phone authentication terminal 80 receives the same inputs as the phone certificate password (PIN number) and the transaction authorization number (transfer authorization number) entered by the user at step S10 (S22), and returns the phone certificate password (PIN number) and the transaction authorization number (transfer authorization number) received at step S22 to the IVR server 50 through the wired/wireless telephone network 60 (S23).

Accordingly, the IVR server 50 determines that the phone certificate password (PIN number) received at step S19 is identical to the phone certificate password (PIN number) received at step S23, determines that the transaction authorization number (transfer authorization number) received at step S19 is identical to the transaction authorization number (transfer authorization number) received at step S23, and thereafter notifies the e-business server 30 of a phone authentication service subscription completion message through the leased line L2, thus terminating the phone authentication service application procedure.

FIG. 4 is a flowchart showing an e-business transaction procedure based on a phone authentication service in the phone authentication method of FIG. 3 in an e-business transaction using a phone authentication terminal for providing a non-repudiation function via association with a trusted authority according to an embodiment of the present invention. Referring to FIGS. 1 to 4, the phone authentication request terminal 10 performs an e-business transaction with the e-business server 30 via the transmission/reception of data to/from the e-business server 30 through the IP network 20 (S31).

After step S31, the phone authentication request terminal 10 receives the same phone certificate password (PIN number) as that entered by the user in the phone authentication service application procedure of FIG. 3 and transmits the phone certificate password to the e-business server 30 through the IP network 20 at step S32.

After step S32, the e-business server 30 transmits e-business details information and the phone certificate password (PIN number) received at step S32 to the TTP server 40 through the leased line L1 (S33).

After step S33, the TTP server 40 determines, based on comparison, whether the phone certificate password (PIN number) received at step S33 is identical to the phone certificate password (PIN number) stored at step S18, and if they are identical to each other, generates and stores transaction non-repudiation information by encrypting combined data of the e-business details information and the phone certificate password (PIN number) (S34). Here, the transaction non-repudiation information is used in the present invention to perform the same function as a function of preventing the user who uses an e-commerce or e-financial transaction from repudiating the transaction itself, wherein such a function is the principal function of a conventional certificate. Further, the TTP server 40 does not store e-business details information indicative of transaction details of e-business upon encrypting and storing the combined data of the e-business details information and the phone certificate password (PIN number).

More specifically, the TTP server 40 is configured such that, when the user repudiates his or her e-business transaction in the future, the encrypted combined data of the e-business details information and the phone certificate password (PIN number) is decrypted and analyzed, thus precluding the user from repudiating the entry of the phone certificate password (PIN number). In this case, since the TTP server 40 does not store e-business details information indicative of transaction details of e-business, it cannot autonomously generate encrypted data.

In this way, the TTP server 40 stores the user's phone certificate password (PIN number), and the encrypted data of the e-business details information and the user's phone certificate password (PIN number), thus enabling the user's actions and information to be distributed.

In summary, the TTP server 40 generates and stores transaction non-repudiation information for an e-business transaction including e-business details information by using the phone certificate password (PIN number), but even the TTP server 40 has the characteristics of making it impossible to check transaction details using only e-business details information itself.

After step S34, the TTP server 40 transmits the results of checking the phone certificate password (PIN number) to the e-business server 30 through the leased line L1 (S35).

After step S35, the e-business server 30 transmits e-business details information at step S31 to the IVR server 50 through the leased line L2 while transmitting a phone approval request to the IVR server 50 (S36).

After step S36, the IVR server 50 transmits phone approval request guidance including the e-business details information received at step S36 based on voice data to the phone authentication terminal 80 through the wired/wireless telephone network 60 (S37).

Accordingly, the phone authentication terminal 80 receives, from the user, the same transaction authorization number (transfer authorization number) as the transaction authorization number (transfer authorization number) input to the phone authentication request terminal 10 at step S14 of FIG. 3 (S38), and transmits the transaction authorization number (transfer authorization number) received at step S38 to the IVR server 50 through the wired/wireless telephone network 60 (S39).

After step S39, the IVR server 50 determines that the transaction authorization number (transfer authorization number) received from the phone authentication terminal 80 is identical to the transaction authorization number(transfer authorization number) stored at step S20 of FIG. 3 by comparing them with each other, and then generates the results of phone approval (S40).

After step S40, the IVR server 50 transmits the phone approval results generated at step S40 to the e-business server 30 through the leased line L2 at step S41.

After step S41, the e-business server 30 completes the e-business transaction (S42), and transmits the phone approval results to the phone authentication request terminal 10 through the IP network 20 at step S43.

FIG. 5 is a flowchart showing in detail an input procedure performed by the phone authentication request terminal 10 for performing a transfer transaction when an e-business transaction performed at steps S31 and S32 is a transfer transaction in the phone authentication method of FIG. 4 in an e-business transaction using a phone authentication terminal for providing a non-repudiation function via association with a trusted authority according to an embodiment of the present invention. Referring to FIGS. 1 to 5, the phone authentication request terminal 10 accesses the e-business server 30 through the IP network 20 at the request of the user, and performs the user's login to the e-business server 30 based on the ID and password (PW) entered by the user (S51).

After the login at step S51, the phone authentication request terminal 10 performs a transfer preliminary transaction via the transmission/reception of data to/from the e-business server 30 through the IP network 20 (S52). Here, in an embodiment of the present invention, the transfer preliminary transaction is performed while going through six detailed steps by means of data transmission from the phone authentication request terminal 10 to the e-business server 30. That is, the phone authentication request terminal 10 transmits a withdrawal account number based on the entry of the user to the e-business server 30 (S52a), and also transmits the password of the withdrawal account entered by the user (S52b). After step S52b, the phone authentication request terminal 10 transmits a transfer amount based on the entry of the user to the e-business server 30 (S52c), and also transmits a deposit account number entered by the user (S52d). After step S52d, the phone authentication request terminal 10 transmits deposit bank information based on the selective entry of the user to the e-business server 30 (S52e), and notifies the e-business server 30 that the transfer of an amount of money is requested as the user clicks 'transfer confirm' of additional transfer and transfer confirm entered by the user (S52f).

After the transfer preliminary transaction at step S52 has been performed, the phone authentication request terminal 10 performs a transfer main transaction via the transmission/reception of data to/from the e-business server 30 through the IP network 20 (S53). Here, as an embodiment of the present invention, the transfer main transaction is performed while going through four detailed steps by means of data transmission from the phone authentication request terminal 10 to the e-business server 30. That is, the phone authentication request terminal 10 transmits a security card password based on the entry of the user to the e-business server 30 (S53a), and also transmits an approval phone number selected and entered by the user (S53b).

Meanwhile, the e-business server 30 generates 35 indicator numbers and random numbers using a random function so as to input the security card password, and requires different security card passwords for every transaction, thus preventing not only "reuse of authentication information" but also "leakage of authentication information generation values".

Further, the e-business server 30 performs information protection via the application of an Extended Validation Secure Sockets Layer (EV SSL) certificate so that the withdrawal account password entered by the phone authentication request terminal 10 at step S52b, the deposit account number entered at step S52d, and the security card password entered at step S53a cannot be decrypted, thus enabling 'a function of coping with an intermediary's attack' to be performed.

In addition, by applying the above-described EV SSL certificate, the e-business server 30 may prevent the interception of a data session between individual phone authentication request terminals 10.

After step S53b, the phone authentication request terminal 10 transmits the phone certificate password (PIN number) based on the entry of the user to the e-business server 30 (S53c), and thereafter sends a confirm message to the e-business server 30 when the user presses a confirm button required to complete the transfer main transaction (S53d), thus completing the transfer main transaction.

A computer-readable recording medium storing the above-described phone authentication program in an e-business transaction using a phone authentication terminal for providing a non-repudiation function via association with a trusted authority according to the embodiment of the present invention may be executed by an application (this may include programs included in a platform or an operating system basically installed on the e-business server 30) basically installed on the e-business server 30, and may also be executed by an application personally installed by the user on the e-business server 30 via an application provider server, such as an application store server or a web server related to applications or a given service. In such a meaning, the computer-readable recording medium storing the above-described phone authentication program in an e-business transaction using a phone authentication terminal for providing a non-repudiation function via association with a trusted authority according to the embodiment may be implemented in the form of an application (i.e., program) basically installed on the e-business server 30 or personally installed by the user and may be recorded on a recording medium readable by a computer such as a terminal.

Such a program is recorded on a computer-readable recording medium and is executed by the computer, and thus the above-described functions may be executed.

In this way, in order to execute the computer-readable recording medium storing the phone authentication program in an e-business transaction using a phone authentication terminal for providing a non-repudiation function via association with a trusted authority according to each embodiment of the present invention, the above-described program may include code that is created in a computer language, such as C, C++, JAVA, and a machine language that are readable by the processor (Central Processing Unit: CPU) of the computer.

Such a code may include function codes related to functions defining the above-described functionalities, and may include an execution procedure-related control code required by the computer processor to execute the above-described functionalities depending on a predetermined procedure.

In addition, the codes may further include memory reference-related code indicating at which location (address) of internal or external memory of the computer the additional information or media data, required by the processor of the computer to execute the above-described functionalities, is to be referred to.

Further, in order for the processor of the computer to execute the above-described functions, when communication with any other remotely located computers or servers is required, the code may further include communication-related code indicating how the processor of the computer should communicate with the remotely located other computers or servers using the communication modules of the computer (e.g., wired and/or wireless communication modules) and which information or media data should be transmitted or received upon communication.

Furthermore, a functional program for implementing the present invention, and codes and code segments related to this program may be easily inferred or changed by programmers skilled in the art to which the present invention pertains in consideration of the system environment or the like of the computer on which a recording medium is read and the program is executed.

Examples of the computer-readable recording medium storing the above-described program may include Read Only Memory (ROM), Random Access Memory (RAM), Compact Disc-ROM (CD-ROM), magnetic tape, a floppy disc, an optical media storage device, etc.

Further, the computer-readable recording medium storing the above-described program may be distributed across computer systems connected to each other over a network and may be stored and executed as computer-readable code in a distributed manner. In this case, one or more of the plurality of distributed computers may execute part of the presented functions and transmit the results of execution to one or more of other distributed computers. The computers that receive the execution results may execute part of the presented functions and provide the results of execution to other distributed computers.

In particular, a computer-readable recording medium storing an application that is a program for executing the computer-readable recording medium storing the above-described phone authentication program in an e-business transaction using a phone authentication terminal for providing a non-repudiation function via association with a trusted authority according to each embodiment of the present invention may be either a storage medium (e.g., hard disc) included in an application store server or an application provider server such as a web server related to an application or a given service, or the application provider server itself.

A computer capable of reading a recording medium that stores an application that is a program for executing the computer-readable recording medium storing the above-described phone authentication program in an e-business transaction using a phone authentication terminal for providing a non-repudiation function via association with a trusted authority according to each embodiment of the present invention may include mobile terminals such as a smart phone, a tablet PC, a Personal Digital Assistant (PDA), and a mobile communication terminal, as well as a typical PC such as a normal desktop or notebook computer, and should be construed as all types of devices enabling computing.

Furthermore, when the computer capable of reading a recording medium that stores an application that is a program for executing the computer-readable recording medium storing the above-described phone authentication program in an e-business transaction using a phone authentication terminal for providing a non-repudiation function via association with a trusted authority according to each embodiment of the present invention is a mobile terminal, such as a smart phone, a tablet PC, a PDA, or a mobile communication terminal, the application may be downloaded from the application provider server to the normal PC and may be installed on the mobile terminal using a synchronization program.

In the above description, even if all components constituting the embodiment of the present invention are described as being combined into a single component or as being combined and operated, the present invention is not necessarily limited to such embodiments. That is, within the range of the objects of the present invention, one or more of all components may be selectively combined and operated. Further, although each of the components may be implemented as a single independent hardware device, some or all of the components may be selectively combined and implemented as a computer program having a program module that executes some or all functions combined by one or more hardware devices. Codes and code segments constituting the computer program may be easily inferred by those skilled in the art to which the present invention pertains. Such a computer program may be stored in computer-readable storage media and may be read and executed by the computer, thus enabling embodiments of the present invention to be implemented. Storage media of computer programs may include magnetic recording media, optical recording media, etc.

Further, it should be understood that the terms "include", "consist of", or "have" described in the present specification are intended to mean that the corresponding component may be included unless a description to the contrary is specifically pointed out. Thus, the terms are not intended to exclude a possibility that other components are excluded, and are intended to further include other components. Unless differently defined, all terms used here including technical or scientific terms have the same meanings as the terms generally understood by those skilled in the art to which the present invention pertains. The terms identical to those defined in generally used dictionaries should be interpreted as having meanings identical to contextual meanings of the related art, and are not interpreted as being ideal or excessively formal meanings unless they are definitely defined in the present specification.

The above description is merely intended to illustratively describe the technical spirit of the present invention, and those skilled in the art to which the present invention pertains, various changes and modifications may be possible without departing from the essential features of the present invention. Therefore, the embodiments disclosed in the present invention are not intended to limit the technical spirit of the present invention and are merely intended to describe the present invention, and the technical spirit of the present invention is not limited by those embodiments of the present invention. The scope of protection of the present invention should be interpreted by the accompanying claims, and all technical spirits in equivalents thereof should be interpreted as being included in the scope of the present invention.

## Claims

1. A phone authentication method in an e-business transaction using a phone authentication terminal for providing a non-repudiation function via association with a trusted authority, comprising:
1) by a phone authentication request terminal, transmitting a phone certificate password (PIN number) to a Trusted Third Party (TTP) server via an e-business server connected to an Internet Protocol (IP) network, and enabling the phone certification password to be stored in the TTP server, thus registering the phone certificate password (PIN number);
2) by the TTP server, receiving e-business details information from the e-business server, receiving a phone certificate password (PIN number) that is re-input for checking from the phone authentication request terminal via the e-business server depending on an e-business transaction between the phone authentication request terminal and the e-business server, and determining that the re-input phone certificate password (PIN number) is identical to the stored phone certificate password (PIN number);
3) by the TTP server, encrypting combined data of the e-business details information and the re-input phone certificate password (PIN number) and storing encrypted data; and
4) by the e-business server, transmitting a phone approval request for making a call to a phone authentication terminal corresponding to an approval phone number received from the phone authentication request terminal to an Interactive Voice Response (IVR) server, thus enabling phone approval to be obtained.

2. The phone authentication method of claim 1, further comprising, before 1):
by the phone authentication request terminal, performing a login to the e-business server through the IP network at a request of the user;
by the phone authentication request terminal, applying to the e-business server for a phone authentication service using the phone authentication terminal owned by the user through the IP network; and
by the e-business server, transmitting a phone authentication service registration request to the phone authentication request terminal through the IP network.

3. The phone authentication method of claim 2, wherein 1) is configured such that:
as the user enters, not only the phone certificate password (PIN number), but also the approval phone number corresponding to a phone number of the phone authentication terminal, and a transaction authorization number (transfer authorization number), if the phone authentication request terminal transmits the approval phone number, the phone certificate password (PIN number), and the transaction authorization number (transfer authorization number) to the e-business server through the IP network,
the e-business server transmits the phone certificate password (PIN number) to the TTP server through a leased line (L1), thus enabling the phone certificate password (PIN number) to be stored in the TTP server.

4. The phone authentication method of claim 3, further comprising, between 1) and 2):
1-1) by the e-business server, requesting the IVR server to make a subscription call for the phone authentication service to the phone authentication terminal corresponding to the approval phone number while transmitting the approval phone number, the phone certificate password (PIN number), and the transaction authorization number (transfer authorization number) to the IVR server through a leased line (L2) connected to the IVR server.

5. The phone authentication method of claim 4, further comprising, between 1) and 2), after performing 1-1):
1-2) by the IVR server, storing the phone certificate password (PIN number) and the transaction authorization number (transfer authorization number) received from the e-business server.

6. The phone authentication method of claim 5, further comprising, between 1) and 2), after performing 1-2):
1-3) by the IVR server, transmitting guidance of phone authentication service subscription as voice data to the phone authentication terminal corresponding to the approval phone number through a wired/wireless telephone network.

7. The phone authentication method of claim 6, further comprising, between 1) and 2), after performing 1-3):
1-4) by the phone authentication terminal, receiving inputs identical to the phone certificate password (PIN number) and the transaction authorization number (transfer authorization number) entered by the user so as to confirm subscription to the phone authentication service, and returning the received phone certificate password (PIN number) and transaction authorization number (transfer authorization number) to the IVR server through the wired/wireless telephone network.

8. The phone authentication method of claim 7, further comprising, between 1) and 2), after performing 1-4):
1-5) by the IVR server, determining that the phone certificate password (PIN number) received from the phone authentication terminal is identical to the phone certificate password (PIN number) stored at 1-2), determining that the transaction authorization number (transfer authorization number) received from the phone authentication terminal is identical to the transaction authorization number (transfer authorization number) stored at 1-2), and notifying the e-business server of a phone authentication service subscription completion message through the leased line (L2), thus terminating a phone authentication service application procedure.

9. The phone authentication method of claim 8, wherein 2) comprises:
2-1) by the phone authentication request terminal, performing the e-business transaction with the e-business server via transmission/reception of data to/from the e-business server through the IP network;
2-2) by the phone authentication request terminal, receiving again the phone certificate password (PIN number) identical to the phone certificate password (PIN number) entered by the user at 1) and transmitting the phone certificate password (PIN number) to the e-business server through the IP network;
2-3) by the e-business server, transmitting the e-business details information and the phone certificate password (PIN number) received at 2-2) to the TTP server through the leased line (L1); and
2-4) by the TTP server, comparing the phone certificate password (PIN number) received at 2-3) with the phone certificate password (PIN number) stored at 1), thus determining whether the phone certificate passwords are identical to each other.

10. The phone authentication method of claim 9, wherein 3) is configured such that the TTP server generates and stores transaction non-repudiation information by encrypting combined data of the e-business details information and the phone certificate password (PIN number) received at 2-3), and such that storage or non-storage of the e-business details information is selectively applicable.

11. The phone authentication method of claim 10, wherein 3) is configured such that the transaction non-repudiation information generated by the TTP server includes, as factors, a transaction date and time (including minutes and seconds), a withdrawal account number, a transfer amount, a deposit account number, a deposit bank code, and a remittee.

12. The phone authentication method of claim 10, further comprising, between 3) and 4):
by the TTP server, transmitting results of checking the phone certificate password (PIN number) to the e-business server through the leased line (L1).

13. The phone authentication method of claim 12, wherein 4) comprises:
4-1) by the e-business server, transmitting the e-business details information to the IVR server through the leased line (L2) while transmitting a phone approval request to the IVR server;
4-2) by the IVR server, transmitting guidance of a phone approval request including voice data-based e-business details information to the phone authentication terminal through the wired/wireless telephone network;
4-3) by the phone authentication terminal, receiving from the user a transaction authorization number(transfer authorization number) identical to the transaction authorization number (transfer authorization number) input to the phone authentication request terminal at 1), and transmitting the received transaction authorization number (transfer authorization number) to the IVR server through the wired/wireless telephone network;
4-4) by the IVR server, comparing the transaction authorization number (transfer authorization number) received from the phone authentication terminal with the transaction authorization number (transfer authorization number) stored at 1-2), and determining that the transaction authorization numbers are identical to each other, and then generating results of phone approval;
4-5) by the IVR server, transmitting the phone approval results to the e-business server through the leased line (L2); and
4-6) by the e-business server, completing the e-business transaction, and then transmitting the phone approval results to the phone authentication request terminal through the IP network.

14. A computer-readable recording medium storing a phone authentication program in an e-business transaction using a phone authentication terminal for providing a non-repudiation function via association with a trusted authority, comprising:
a phone authentication application unit for controlling a transmission/reception unit so that a phone certificate password (PIN number) is received from a phone authentication request terminal through an IP network and is transmitted to a Trusted Third Party (TTP) server, thus registering the phone certificate password (PIN number) in the TTP server;
an e-business transaction unit for performing an e-business transaction with the phone authentication request terminal;
an e-business transaction non-repudiation unit for controlling the transmission/reception unit so that e-business details information and a phone certificate password (PIN number), which is re-entered for checking from the phone authentication request terminal via the e-business server, are transmitted to the TTP server, thus allowing the TTP server to encrypt and store combined data of the e-business details information and the phone certificate password (PIN number); and
a phone authentication execution unit for controlling the transmission/reception unit so that a phone approval request to make a call to a phone authentication terminal corresponding to an approval phone number received from the phone authentication request terminal is transmitted to an Interactive Voice Response (IVR) server, thus enabling phone approval of the phone authentication terminal to be obtained.
